# EUROPEAN PATENT SPECIFICATION

(11) **EP 0 420 330 B1**
(45) Date of publication and mention of the grant of the patent: **30.11.1994**
(21) Application number: 90202505.5
(22) Date of filing: 21.09.1990
(51) Int. Cl.: C08G 67/02

(54) **Copolymers of carbon monoxide and olefinically unsaturated compounds**
Copolymere von Kohlenstoffmonoxid und olefinisch ungesättigten Verbindungen
Copolymères de monoxyde de carbone et de composés oléfiniquement insaturés

(30) Priority: 25.09.1989 NL 8902383
(43) Date of publication of application: 03.04.1991
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 351 023
- CHEMICAL ABSTRACTS, vol. 88, no. 1, 2nd January 1978, page 537, abstract no.6350c, Columbus, Ohio, US; G.P. CHIUSOLI et al.: "Double bond and carbonmonoxide insertion. IV. Synthesis of alicyclic compounds, scope and limitations"

## Description

The invention relates to copolymers of carbon monoxide with one or more olefinically unsaturated compounds.

High molecular weight linear polymers of carbon monoxide and one or more lower α-olefins with at most four carbon atoms in the molecule (for the sake of brevity referred to as monomers A) such as ethene, in which polymers the units originating in carbon monoxide on the one hand and the units originating in the monomers A used on the other hand occur substantially in alternating order, can be prepared by contacting the monomers at an elevated temperature and pressure in the presence of a lower alkanol, such as methanol, with a catalyst which comprises a Group VIII metal and a phosphorus or nitrogen bidentate ligand.

For some uses, for instance as pour point reducers in paraffin-containing hydrocarbon oils, the afore-mentioned high molecular weight linear polymers can be very useful, provided that relatively long alkyl side chains are present therein. Attempts at preparing these polymers in the manner described hereinbefore by starting from carbon monoxide and a higher α-olefin such as hexadecene-1 have remained unsuccessful. Both the polymerization carried out using a catalyst comprising a phosphorus bidentate ligand and the polymerization carried out using a catalyst comprising a nitrogen bidentate ligand led to substantially low molecular weight products which are useless for the said purpose.

In the past, the Applicant has carried out an investigation into the use of certain cyclohexane derivatives as comonomers in the polymerization of carbon monoxide with one or more monomers A. The monomers concerned (for the sake of brevity referred to as monomers B) are made up of a cyclohexane ring in which
a) carbon atoms 1 and 4 are connected through a single oxygen or carbon atom,
b) carbon atoms 5 and 6 are connected through an olefinic double bond, and
c) at least one of carbon atoms 2 and 3 bears a carbonyloxy group which forms part of a carboxylic acid or dicarboxylic anhydride group.

During this investigation, the afore-mentioned catalysts were used in attempts to prepare linear copolymers of carbon monoxide with one or more monomers A and one or more monomers B, in which polymers the units originating in carbon monoxide on the one hand and the units originating in monomers A and B on the other hand occur substantially in alternating order, and in which moreover the polymer fragments made up of a unit originating in carbon monoxide and a unit originating in a monomer A on the one hand and the polymer fragments made up of a unit originating in carbon monoxide and a unit originating in a monomer B on the other hand occur substantially randomly distributed within the polymer chains. The conclusions drawn from this investigation were the following:
1) Copolymers of carbon monoxide with one or more monomers A and one or more monomers B as described hereinabove cannot be prepared in this manner.
2) The use of a catalyst comprising a phosphorus bidentate ligand leads to linear polymers in which the units originating in carbon monoxide on the one hand and the units originating in the monomers B on the other hand occur substantially in alternating order.
3) Contacting a catalyst comprising a nitrogen bidentate ligand at an elevated temperature and pressure with a monomer mixture which, in addition to carbon monoxide, comprises exclusively one or more monomers B (no monomers A) leads to linear polymers in which the units originating in carbon monoxide on the one hand and the units originating in the applied monomers B on the other hand occur substantially in alternating order. If in the latter case the nitrogen bidentate ligand in the catalyst is replaced with a phosphorus bidentate ligand, no polymerization takes place.
4) In the case of the polymers prepared in the presence of methanol, at least part of the carboxylic acid and/or dicarboxylic anhydride groups originally present in the monomers B occur in the polymers as methyl ester groups.

Building on the idea that, possibly, the esterification mentioned sub 4) might also come about if methanol was replaced with a higher alkanol having at least eight carbon atoms in the molecule (for the sake of brevity referred to as a C₈⁺ alkanol), and that polymers of carbon monoxide with one or more monomers B in which alkyl chains derived from the C₈⁺ alkanol occur as side chains could thus be obtained, the Applicant has carried out an investigation. It should be noted here that in view of the results of earlier research during which it was established that when the afore-mentioned catalysts were used to polymerize carbon monoxide with ethene, the replacement of methanol with a C₈⁺ alkanol led to a dramatic fall in polymer yield, the expectations of the succes of this polymerization were not very high.

During the polymerization of carbon monoxide with one or more monomers B and optionally also one or more monomers A with the aid of afore-mentioned catalysts and in the presence of a C₈⁺ alkanol, the following surprising facts came to light.
I) The application of a catalyst comprising a phosphorus bidentate ligand to a monomer mixture which, in addition to carbon monoxide, comprises only one or more monomers B (no monomers A), leads to the production of linear polymers in which the units originating in carbon monoxide on the one hand and the units originating in the monomers B used on the other hand occur substantially in alternating order, with at least part of the carboxylic acid and/or dicarboxylic anhydride groups originally present in the monomers B occurring in the polymers as C₈⁺ alkyl ester groups.
II) The application of a catalyst comprising a phosphorus bidentate ligand to a monomer mixture which, in addition to carbon monoxide and one or more monomers B, also comprises one or more monomers A, leads to the production of linear polymers in which the units originating in carbon monoxide on the one hand and the units originating in the monomers A and B used on the other hand occur substantially in alternating order, and in which moreover the polymer fragments made up of a unit originating in carbon monoxide and a unit originating in a monomer A on the one hand and the polymer fragments made up of a unit originating in carbon monoxide and a unit originating in a monomer B on the other hand occur substantially randomly distributed within the polymer chains. In this case, too, at least part of the carboxylic acid and/or dicarboxylic anhydride groups originally present in the monomers B occur in the polymers as C₈⁺ alkyl ester groups.
III) When a catalyst comprising a nitrogen bidentate ligand is applied to a monomer mixture which, in addition to carbon monoxide, comprises one or more monomers B and optionally also one or more monomers A, only traces of polymer material are formed.

Polymers as described under I and II are novel.

The present patent application therefore relates to novel copolymers of carbon monoxide with one or more olefinically unsaturated compounds, which copolymers can be defined as follows
a) they have a linear structure,
b) they are made up of units originating in carbon monoxide, units originating in one or more monomers B and optionally units originating in one or more monomers A,
c) in these copolymers, the units originating in carbon monoxide on the one hand and the units originating in monomers B and optional monomers A, on the other hand occur substantially in alternating order,
d) when both units originating in monomers B and units originating in monomers A are present, then the copolymer fragments made up of a unit originating in carbon monoxide and a unit originating in a monomer A on the one hand and the copolymer fragments made up of a unit originating in carbon monoxide and a unit originating in a monomer B on the other hand occur substantially randomly distributed within the copolymer chains, and
e) at least part of the carboxylic acid and/or dicarboxylic anhydride groups originally present in the monomers B occur in the polymers as alkyl ester groups, which alkyl ester groups contain at least eight carbon atoms in the alkyl moiety.

Further, the present patent application relates to the preparation of the CO/B and CO/B/A polymers by contacting the monomers CO and B or CO, B and A at an elevated temperature and pressure and in the presence of a C₈⁺ alkanol with a catalyst comprising a Group VIII metal and a phosphorus bidentate ligand. Finally, the present patent application relates to shaped objects consisting at least partly of these polymers.

The monomers B used during the preparation of the polymers of the invention comprise a cyclohexane ring in which the carbon atoms 1 and 4 are connected through a single oxygen or carbon atom, and in which the carbon atoms 5 and 6 are connected through an olefinic double bond. If in the monomers B, the carbon atoms 1 and 4 are connected through an oxygen atom, they may be represented as 1,4-endoxo-5-cyclohexene derivatives. If in the monomers B, the carbon atoms 1 and 4 are connected through a carbon atom, which carbon atom further bears exclusively two hydrogen atoms, they may be represented as 5-norbornene derivatives. If desired, the carbon atom which is responsible for the linkage between the carbon atoms 1 and 4 may include one or two hydrocarbon substituents. If the carbon atom concerned bears two methyl groups, the monomers B may be represented as 5-norbornene derivatives. In the monomers B, at least one of the carbon atoms 2 and 3 of the cyclohexane ring should bear a carbonyloxy group which forms part of a carboxylic acid or dicarboxylic anhydride group. If in the monomers B, only one of carbon atoms 2 and 3 bears a carbonyloxy group, then the other carbon atom may bear an alkyl substituent, as is the case in 3-methyl-5-norbornene-2-carboxylic acid. If in the monomers B, both carbon atoms 2 and 3 bear a carbonyloxy group, then these carbonyloxy groups may occur either both as carboxylic acid groups or together as a dicarboxylic anhydride group. Compounds that can suitably be used as the monomers B in the preparation of the polymers of the invention are compounds derived from 5-norbornene, such as 5-norbornene-2,3-dicarboxylic anhydride, 5-norbornene-2,3-dicarboxylic acid and 3-methyl-5-norbornene-2-carboxylic acid and compounds derived from 1,4-endoxo-5-cyclohexene, such as 1,4-endoxo-5-cylcohexene-2,3-dicarboxylic anhydride.

Preference is given to the use of 5-norbornene-2,3-dicarboxylic anhydride as the monomer B.

If it is intended to prepare in accordance with the invention polymers of carbon monoxide with one or more monomers B and also one or more monomers A, then the monomer mixture should include one or more monomers A. It is preferred to use ethene as monomer A. Further, in the preparation of the polymers of the invention, preference is given to a monomer mixture which, in addition to carbon monoxide, comprises only one monomer B and, when monomers A are used, comprises only one monomer A.

As stated hereinbefore, the polymers of the invention can be prepared by contacting the monomers at an elevated temperature and pressure and in the presence of a C₈⁺ alkanol with a catalyst comprising a Group VIII metal and a phosphorus bidentate ligand. It is preferred to use unbranched C₈⁺ alkanols, in particular those containing up to 30 carbon atoms in the molecule and more in particular those containing at least 10 and at most 24 carbon atoms in the molecule. In the polymer preparation, very favourable results were achieved by using a C₈⁺ alkanol chosen from n-decanol-1, n-tetradecanol-1 and n-octadecanol-1.

In the present patent application, Group VIII metals should be taken to be the noble metals ruthenium, rhodium, palladium, osmium, iridium and platinum, and the iron group metals iron, cobalt and nickel.

In the present patent application, phosphorus bidentate ligands should be taken to be compounds of the general formula R¹R²P-R-PR³R⁴ wherein R¹, R², R³ and R⁴ are identical or different optionally polar-substituted hydrocarbyl groups and R is a bivalent bridging group having at least two carbon atoms in the bridge which connects the two phosphorus atoms.

In the catalysts that are used in the preparation of the polymers of the invention, the preferred Group VIII metal is chosen from palladium, nickel and cobalt. Special preference is given to palladium as the Group VIII metal. By preference, the Group VIII metal is taken up in the catalysts in the form of a salt of a carboxylic acid, in particular in the form of an acetate. In addition to a Group VIII metal and a phosphorus bidentate ligand, the catalysts that are used in the preparation of the polymers of the invention preferably include an anion of an acid with a pKa of less than 4 and in particular an anion of an acid with a pKa of less than 2. Examples of acids with a pKa of less than 2 are sulphuric acid, perchloric acid, sulphonic acids, such as methanesulphonic acid, trifluoromethanesulphonic acid and para-toluene-sulphonic acid, and halogen carboxylic acids, such as trichloroacetic acid, difluoroacetic acid and trifluoroacetic acid. Preference is given to a sulphonic acid, such as para-toluene-sulphonic acid or a halogen carboxylic acid, such as trifluoroacetic acid. The anion of an acid with a pKa of less than 4 may be taken up in the catalyst in the form of an acid and/or in the form of a salt, such as a copper salt. Preferably, the anion is present in the catalysts in a quantity of 1-1000 and in particular of 2-100 mol per mol of Group VIII metal. The anions of acids with a pKa of less than 4 may be present in the catalysts because they have been added as individual components, or because such a palladium compound for instance as palladium trifluoroacetate or palladium para-tosylate was used.

In order to enhance the activity of the catalysts, a 1,4-quinone may be included therein. For this purpose, 1,4-benzoquinone and 1,4-naphthoquinone are very suitable. The applied quantity of 1,4-quinone is preferably 1-10000 and in particular 10-5000 mol per mol of Group VIII metal.

In the catalysts that are used in the preparation of the polymers of the invention, the phosphorus bidentate ligand is preferably present in a quantity of 0.5-10 and in particular of 0.75-5 mol per mol of Group VIII metal. Preference is given to phosphorus bidentate ligands in which the groups R¹, R², R³ and R⁴ are identical aryl groups and in which the bridging group R has three atoms in the bridge at least two of which are carbon atoms and in particular to such compounds in which the groups R¹, R², R³ and R⁴ are identical phenyl groups containing one or more polar substituents at least one of which is present in a position ortho in respect to the phosphorus atom to which the phenyl group involved is bound. Preferably, the polar substituents are alkoxy groups, in particular methoxy groups. Examples of such bidentate ligands are
1,3-bis[bis(2-methoxy phenyl)phosphino]propane,
1,3-bis[bis(2,4-dimethoxy phenyl)phosphino]propane, and
1,3-bis[bis(2,4,6-trimethoxy phenyl)phosphino]propane.
1,3-bis[bis(2-methoxy phenyl)phosphino]propane is preferred.

The quantity of catalyst employed in the preparation of the polymers may vary within wide ranges. Per mol of olefinically unsaturated compound to be polymerized, such a quantity of catalyst is preferably employed as to comprise 10⁻⁷-10⁻³ and in particular 10⁻⁶-10⁻⁴ mol of Group VIII metal.

The polymers are preferably prepared at a temperature of 30-150 °C and a pressure of 5-150 bar and in particular at a temperature of 40-130 °C and a pressure of 10-100 bar. The molar ratio of olefinically unsaturated compounds relative to carbon monoxide is preferably 10:1-1:10 and in particular 5:1-1:5.

The invention will now be illustrated with the aid of the following examples.

### Example 1

A stirred autoclave with a volume of 250 ml and containing a mixture of 40 ml of n-decanol-1 and 10 g of 5-norbornene-2,3-dicarboxylic anhydride was charged with a catalyst comprising
0.1 mmol of palladium acetate,
2 mmol of trifluoroacetic acid and
0.15 mmol of 1,3-bis(diphenylphosphino)propane.

After air was removed from the autoclave by evacuation, ethene was blown in until a pressure of 20 bar was reached, followed by carbon monoxide until a pressure of 50 bar was reached. Finally, the contents of the autoclave were heated to 85 °C. Polymerization was terminated after 2 hours by cooling to room temperature and releasing the pressure.

The product was 26 g of terpolymer.

### Example 2

Example 1 was substantially repeated, except for the following differences
a) only carbon monoxide was blown into the autoclave until a pressure of 30 bar was reached (no ethene), and
b) after the contents of the autoclave had been heated to 85 °C, they were kept at this temperature for 30 minutes and subsequently, at 120 °C for another 4½ hours.
   The product was 16 g of copolymer.

### Example 3

Example 1 was substantially repeated, except for the following differences
a) the autoclave contained a mixture of 50 g of n-tetradecanol-1 and 10 g of 5-norbornene-2,3-dicarboxylic anhydride which had been brought to a temperature of 50 °C, and
b) after the contents of the autoclave had been heated to 110 °C, they were kept at this temperature for 1½ hour.
   The product was 20 g of terpolymer.

### Example 4

Example 3 was substantially repeated, the difference being that the contents of the autoclave were kept not at 110 °C for 1½ hour, but at 75 °C for 10 hours.

The product was 21 g of terpolymer.

### Example 5

Example 1 was substantially repeated, except for the following differences
a) the autoclave contained a mixture of 50 g of n-octadecanol-1 and 10 g of 5-norbornene-2,3-dicarboxylic anhydride which had been brought to a temperature of 70 °C, and
b) after the contents of the autoclave had been heated to 75 °C, they were kept at this temperature for 10 hours.
   The product was 30 g of terpolymer.

Examples 1-5 are examples in accordance with the invention. In these examples, copolymers and terpolymers according to the invention were prepared by contacting a mixture of carbon monoxide, 5-norbornene-2,3-dicarboxylic anhydride (monomer B) and in some cases ethene (monomer A) at an elevated temperature and pressure and in the presence of a C₈⁺ alkanol with a catalyst comprising palladium and a phosphorus bidentate ligand.

All the polymers prepared by Examples 1-5 were subjected to ¹³C-NMR analysis. The results are summarized as follows.
1) The polymers prepared by Examples 1-5 had a linear structure.
2) In the polymers prepared by Examples 1-5, about 50% of the carbonyloxy groups present in the monomer B occurred as C₈⁺ alkyl ester groups.
3) In the copolymers prepared by Example 2, the units originating in carbon monoxide on the one hand and the units originating in the monomer B on the other hand occurred substantially in alternating order.
4) In the terpolymers prepared by Examples 1 and 3-5, the units originating in carbon monoxide on the one hand and the units originating in the monomers B and A on the other hand occurred substantially in alternating order.
5) In the terpolymers prepared by Examples 1 and 3-5, the polymer fragments made up of a unit originating in carbon monoxide and a unit originating in the monomer A on the one hand and the polymer fragments made up of a unit originating in carbon monoxide and a unit originating in the monomer B on the other hand occurred substantially randomly distributed within the polymer chains.
6) The respective terpolymers prepared by Examples 1 and 3-5 contained about the following percentages of units originating in the monomer A, calculated on the total number of units originating in the monomers A and B: 40%, 35%, 10% and 15%.

## Claims

1. Copolymers of carbon monoxide with one or more olefinically unsaturated compounds, characterized in that
a) they have a linear structure,
b) they are made up of units originating in carbon monoxide, units originating in one or more monomers (B) which comprise a cyclohexane ring in which the carbon atoms 1 and 4 are connected through a single carbon or oxygen atom, in which the carbon atoms 5 and 6 are connected through an olefinic double bond and in which at least either one of the carbon atoms 2 and 3 bears a carbonyloxy group which forms part of a carboxylic or dicarboxylic anhydride group, and optionally units originating in one or more α-olefins (monomers A) with at most four carbon atoms in the molecule,
c) in these copolymers, the units originating in carbon monoxide on the one hand and the units originating in monomers B and optional monomers A on the other hand occur substantially in alternating order,
d) when both units originating in monomers B and units originating in monomers A are present, the copolymer fragments made up of a unit originating in carbon monoxide and a unit originating in a monomer A on the one hand and the copolymer fragments made up of a unit originating in carbon monoxide and a monomer B on the other hand occur substantially randomly distributed within the copolymer chains, and
e) at least part of the carboxylic acid and/or dicarboxylic anhydride groups originally present in the monomers B occur in the polymers as alkyl ester groups, which alkyl ester groups contain at least eight carbon atoms in the alkyl moiety.

2. Copolymers as claimed in claim 1, characterized in that they are made up of units originating in carbon monoxide and units originating in only one monomer B and optionally units originating in only one monomer A.

3. Copolymers as claimed in claim 1 or 2, characterized in that they are made up of units originating in carbon monoxide and units originating in 5-norbornene-2,3-dicarboxylic anhydride and optionally units originating in ethene.

4. Copolymers as claimed in one or more of claims 1-3, characterized in that the alkyl ester groups comprise an unbranched alkyl chain with at least 10 and at most 24 carbon atoms.

5. Process for the preparation of copolymers as claimed in claim 1, characterized in that a mixture of carbon monoxide with one or more monomers B and optionally one or more monomers A is contacted at an elevated temperature and pressure and in the presence of an alkanol with at least 8 carbon atoms in the molecule with a catalyst comprising a Group VIII metal and a phosphorus bidentate ligand of the general formula R¹R²P-R-PR³R⁴, wherein R¹, R², R³ and R⁴ are identical or different optionally polar-substituted hydrocarbyl groups and R is a bivalent bridging group having at least two carbon atoms in the bridge which connects the two phosphorus atoms.

6. Process as claimed in claim 5, characterized in that the bidentate ligand has the general formula (R¹)₂P-R-P(R¹)₂, wherein R¹ is a phenyl group containing one or more polar substituents at least one of which is present in a position ortho in respect to the phosphorus atom to which the phenyl group involved is bound, and the bridging group R has three atoms in the bridge at least two of which are carbon atoms.

7. Process as claimed in claim 5 or 6, characterized in that in the catalyst, the bidentate ligand is present in a quantity of 0.5-10 mol per mol of Group VIII metal.

8. Process as claimed in one or more of claims 5-7, characterized in that in addition the catalyst includes an anion of an acid with a pKa of less than 4.

9. Process as claimed in claim 8, characterized in that in the catalyst, the anion of an acid with a pKa of less than 4 is present in a quantity of 1-1000 mol per mol of Group VIII metal.

10. Process as claimed in one or more of claims 5-9, characterized in that the polymerization is carried out at a temperature of 30-150 °C, a pressure of 5-150 bar and a molar ratio of the olefinically unsaturated compounds relative to carbon monoxide, of 10:1-1:10, and that per mol of olefinically unsaturated compound to be polymerized, such a quantity of catalyst is used as to contain 10⁻⁷-10⁻³ mol of Group VIII metal.

## Patentansprüche

1. Copolymers aus Kohlenmonoxid und einer oder mehreren olefinisch ungesättigten Verbindung(en), dadurch gekennzeichnet, daß
a) sie eine lineare Struktur aufweisen,
b) sie aus Einheiten, die sich von Kohlenmonoxid ableiten, aus Einheiten, die sich von einem oder mehreren Monomer(en) B, die einen Cyclohexanring aufweisen, in welchem die Kohlenstoffatome 1 und 4 durch ein einzelnes Kohlenstoff- oder Sauerstoffatom miteinander verbunden sind, in welchem die Kohlenstoffatome 5 und 6 mit einer olefinischen Doppelbindung miteinander verbunden sind und in welchem mindestens die Kohlenstoffatome 2 und 3 eine Carbonyloxygruppe tragen, welche Teil einer Carbonsäuregruppe oder Dicarbonsäureanhydridgruppe bildet und gegebenenfalls aus Einheiten, die sich von einem oder mehreren α-Olefin(en) (Monomere A) mit höchstens 4 Kohlenstoffatomen im Molekül ableiten, bestehen und
c) in diesen Copolymeren, die sich von Kohlenmonoxid ableitenden Einheiten einerseits und die sich von Monomer(en) B und gegebenenfalls von Monomer(en) A abgeleiteten Einheiten andererseits praktisch in alternierender Ordnung vorliegen,
d) falls sowohl von Monomeren B als auch von Monomeren A abgeleitete Einheiten vorhanden sind, die aus einer von Kohlenmonoxid abgeleiteten Einheit und einer vom Monomer A abgeleiteten Einheit aufgebauten Copolymerfragmente einerseits und die aus einer von Kohlenmonoxid abgeleiteten Einheit und einer von Monomer B abgeleiteten Einheit gebildeten Copolymerfragmente andererseits praktisch statistisch verteilt in den Polymerketten vorliegen
e) mindestens ein Teil der ursprünglich in den Monomeren B vorhandenen Carbonsäuregruppen und/oder Dicarbonsäureanhydridgruppen in den Polymeren in Form von Alkylestergruppen vorhanden sind, welche Alkylestergruppen mindestens 8 Kohlenstoffatome in dem Alkylteil aufweisen.

2. Copolymere, wie in Anspruch 1 beansprucht, dadurch gekennzeichnet, daß sie aus Einheiten bestehen, die sich von Kohlenmonoxid ableiten und aus Einheiten, die sich nur von einer Monomerart B ableiten und gegebenenfalls aus Einheiten bestehen, die sich nur von einer Monomerart A ableiten.

3. Copolymere, wie in Anspruch 1 oder 2 beansprucht, dadurch gekennzeichnet, daß sie aus Einheiten, die sich von Kohlenmonoxid ableiten und aus Einheiten, die sich von 5-Norbornen-2,3-dicarbonsäureanhydrid ableiten, und gegebenfalls aus Einheiten bestehen, die sich von Ethen ableiten.

4. Copolymere, wie in einem oder mehreren der Ansprüche 1 bis 3 beansprucht, dadurch gekennzeichnet, daß die Alkylestergruppen eine unverzweigte Alkylkette mit mindestens 10 und höchstens 24 Atomen umfassen.

5. Verfahren zur Herstellung von Copolymeren, wie in Anspruch 1 beansprucht, dadurch gekennzeichnet, daß eine Mischung aus Kohlenmonoxid und einem oder mehreren Monomer(en) B und gegebenenfalls einem oder mehreren Monomer(en) A bei erhöhter Temperatur und erhöhtem Druck und in Anwesenheit eines Alkanols mit mindestens 8 Kohlenstoffatomen im Molekül mit einem Katalysator kontaktiert wird, der ein Metall der Gruppe VIII und einen zweizähnigen phosphorhaltigen Liganden der allgemeinen Formel R¹R²P-P-PR³R⁴ umfaßt, in welcher R¹, R², R³ und R⁴ gleiche oder unterschiedliche, gegebenfalls polarsubstituierte, Kohlenwasserstoffgruppen sind und R eine 2-wertige Brückengruppe mit mindestens zwei Kohlenstoffatomen in der Brücke darstellt, welche die beiden Phosphoratome miteinander verbindet.

6. Verfahren, wie in Anspruch 5 beansprucht, dadurch gekennzeichnet, daß der zweizähnige Ligand der allgemeinen Formel (R¹)₂P-R-P(R¹)₂ entspricht, in welcher R¹ eine Phenylgruppe mit einem oder mehreren polaren Substituent(en) bedeutet, von denen sich mindestens einer in o-Stellung zu dem Phosphoratom befindet, an welches die betreffende Phenylgruppe gebunden ist, wobei die Brückengruppe R 3 Atome in der Brücke aufweist, von denen mindestens 2 Kohlenstoffatome sind.

7. Verfahren, wie in Anspruch 5 oder 6 beansprucht, dadurch gekennzeichnet, daß der zweizähnige Ligand im Katalysator in einer Menge vorliegt, welche 0,5 bis 10 Mol je Mol Metall der Gruppe VII entspricht.

8. Verfahren, wie in einem oder mehreren der Ansprüche 5 bis 7 beansprucht, dadurch gekennzeichnet, daß der Katalysator auch ein Anion einer Säure mit einem pKa-Wert von kleiner als 4 enthält.

9. Verfahren, wie in Anspruch 8 beansprucht, dadurch gekennzeichnet, daß das Anion mit einer Säure mit einem pKa-Wert kleiner als 4 in dem Katalysator in einer Menge vorliegt, welche 1 bis 1000 Mol je Mol Metall der Gruppe VIII entspricht.

10. Verfahren, wie in irgendeinem oder mehreren der Ansprüche 5 bis 9 beansprucht, dadurch gekennzeichnet, daß die Polymerisation bei einer Temperatur im Bereich von 30 bis 150°C, einem Druck im Bereich von 5 bis 150 bar und einem Molverhältnis der olefinisch ungesättigten Verbindung relativ zum Kohlenmonoxid im Bereich von 10:1 bis 1:10 durchgeführt wird und daß je Mol zu polimerisierender olefinisch ungesättigter Verbindung eine solche Katalysatormenge eingesetzt wird, die 10⁻⁷ bis 10⁻³ Mol an Metall der Gruppe VIII enthält.

## Revendications

1. Copolymères d'oxyde de carbone avec un ou plusieurs composé(s) à insaturation oléfinique, caractérisés en ce que :
a) ils ont une structure linéaire,
b) ils sont formés de motifs provenant de l'oxyde de carbone, de motifs provenant d'un ou plusieurs monomères B qui comprennent un noyau de cyclohexane dans lequel les atomes de carbone 1 et 4 sont reliés par l'entremise d'un seul atome de carbone ou d'oxygène, les atomes de carbone 5 et 6 sont reliés par une double liaison oléfinique et au moins l'un des atomes de carbone 2 et 3 porte un groupe carbonyloxy faisant partie d'un groupe anhydride carboxylique ou dicarboxylique, et, facultativement, les motifs provenant d'une ou plusieurs alpha-oléfine(s) (monomères A) contenant au moins quatre atomes de carbone dans la molécule,
c) dans ces copolymères, les motifs provenant de l' oxyde de carbone d'une part et les motifs provenant des monomères B et des monomères facultatifs A, d'autre part, apparaissent sensiblement en ordre alterné,
d) quand à la fois des motifs provenant des monomères B et des motifs provenant des monomères A sont présents, alors les fragments copolymères formés d'un motif provenant de l'oxyde de carbone et d'un motif provenant du monomère A, d'une part, et les fragments copolymères formés d'un motif provenant de l'oxyde de carbone et d'un motif provenant du monomère B, d'autre part, apparaissent de façon sensiblement fortuite en distribution dans les chaînes du copolymère, et
e) une partie au moins des groupes acide carboxylique et/ou anhydride dicarboxylique qu'on trouve initialement dans les monomères B apparaît dans les polymères sous forme de groupes esters alkyliques, ces groupes esters alkyliques contenant au moins 8 atomes de carbone dans le fragment alkyle.

2. Copolymères selon la revendication 1, caractérisés en ce qu'ils sont préparés à partir de motifs provenant de l'oxyde de carbone et de motifs provenant d'un seul monomère B et, facultativement, de motifs provenant d'un seul monomère A.

3. Copolymères selon la revendication 1 ou 2, caractérisés en ce qu'ils sont préparés à partir de motifs provenant de l'oxyde de carbone et de motifs provenant de l'anhydride 5-norbornène-2,3-dicarboxylique et, facultativement, de motifs provenant de l'éthène.

4. Copolymères selon l'une quelconque des revendications 1 à 3 caractérisés en ce que les groupes esters alkyliques comprennent une chaîne alkyle non ramifiée contenant au moins 10 et au plus 24 atomes de carbone.

5. Procédé de préparation de copolymères selon la revendication 1, caractérisé en ce qu'un mélange d'oxyde de carbone avec un ou plusieurs monomère (s) B et, facultativement, un ou plusieurs monomère (s) A est mis en contact à une température et à une pression élevées et présence d'un alcanol contenant au moins 8 atomes de carbone dans la molécule avec un catalyseur comprenant un métal du Groupe VIII et un ligand bidenté de phosphore de formule générale :
R¹R²P-R-PR³R⁴,
dans laquelle R¹, R², R³ et R⁴, qui peuvent être identiques ou différents, représentent des groupes hydrocarbyle substitués par un groupe facultativement polaire et R est un groupe de pontage divalent contenant au moins deux atomes de carbone dans le pontage qui relie les deux atomes de phosphore.

6. Procédé selon la revendication 5, caractérisé en ce que le ligand bidenté répond à la formule
générale (R¹)₂P-R-P(R¹)₂,
dans laquelle
R¹ est un radical phényle contenant un ou plusieurs substituant(s) polaire(s) dont un au moins est présent en position ortho par rapport à l'atome de phosphore auquel le groupe phényle considéré est lié, et le groupe de pontage R contient trois atomes dans le pontage dont deux au moins sont des atomes de carbone.

7. Procédé selon la revendication 5 ou 6, caractérisé en ce que dans le catalyseur, le ligand bidenté est présent en une quantité de 0,5 à 10 moles par mole du métal du Groupe VIII.

8. Procédé selon l'une quelconque des revendications 5 à 7, caractérisé en ce que le catalyseur contient en outre un anion d'un acide ayant une pKa inférieure à 4.

9. Procédé selon la revendication 8, caractérisé en ce que dans le catalyseur l'anion d'un acide ayant une pKa inférieure à 4 est présent en une quantité de 1 à 1000 moles par mole du métal du Groupe VIII.

10. Procédé selon l'une quelconque des revendications 5 à 9, caractérisé en ce qu'on effectue la polymérisation à une température de 30 à 150°C, sous une pression de 5 à 150 bars et avec un rapport molaire des composés à insaturation oléfinique à l'oxyde de carbone compris entre 10:1 et 1:10 et en ce que par mole du composé à insaturation oléfinique à polymériser, on utilise une quantité de catalyseur qui contient de 10⁻⁷ à 10⁻³ mole de métal du Groupe VIII.
